(19) Europäisches Patentamt
European Patent Office
Office européen des brevets

(11) **EP 4 131 744 A1**

(12) **EUROPEAN PATENT APPLICATION**
published in accordance with Art. 153(4) EPC

(43) Date of publication:
**08.02.2023 Bulletin 2023/06**

(21) Application number: **21853343.8**

(22) Date of filing: **02.08.2021**

(51) International Patent Classification (IPC):
**H02K 9/19** *(1968.09)*        **H02K 1/20** *(1968.09)*
**H02K 5/20** *(1968.09)*

(52) Cooperative Patent Classification (CPC):
**H02K 1/20; H02K 5/20; H02K 9/19;** Y02T 10/64

(86) International application number:
**PCT/CN2021/110150**

(87) International publication number:
**WO 2022/028381 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.08.2020  CN 202010771190
03.08.2020  CN 202021586557 U
03.08.2020  CN 202010768996
03.08.2020  CN 202021586558 U

(71) Applicants:
• **Anhui Welling Auto Parts Co., Ltd.**
**Hefei, Anhui 230031 (CN)**
• **Guangdong Welling Auto Parts Co., Ltd.**
**Foshan, Guangdong 528311 (CN)**

(72) Inventors:
• **WANG, Fei**
**Hefei, Anhui 230031 (CN)**
• **CHEN, Jintao**
**Hefei, Anhui 230031 (CN)**
• **PU, Xiaomin**
**Hefei, Anhui 230031 (CN)**
• **HU, Yiming**
**Hefei, Anhui 230031 (CN)**

(74) Representative: **Whitlock, Holly Elizabeth Ann**
**Maucher Jenkins**
**Seventh Floor Offices**
**Artillery House**
**11-19 Artillery Row**
**London SW1P 1RT (GB)**

(54) **DRIVE MOTOR, DRIVE SYSTEM HAVING SAID DRIVE MOTOR, AND VEHICLE**

(57)     Disclosed by the present application are a drive motor, a drive system, and a vehicle. The drive motor comprises a motor casing body and a stator iron core mounted within the motor casing body, the motor casing body has a fluid inlet and a fluid outlet, and a trimmed edge extending along the axial direction of the stator iron core is arranged on an outer circumferential wall of the stator iron core, wherein a coolant channel is formed by space between the trimmed edge and an inner peripheral wall of the motor casing body, the fluid inlet and the fluid outlet are in communication with the coolant channel, and the depth of the trimmed edge satisfies relational formula $b = \dfrac{k_2 L h}{R_{out} - R_{in}}$, wherein $b$ is the depth of the trimmed edge, $R_{out}$ is the outer diameter of the stator iron core, $R_{in}$ is the inner diameter of the stator iron core, $L$ is a yoke thickness of the stator iron core, $h$ is the stack thickness of the stator iron core, and $k_2$ is a coefficient and is 0.05 to 0.1. The drive motor of the embodiment of the present application has high cooling efficiency and a good heat dissipation effect.

FIG. 2

## Description

## CROSS-REFERENCE TO RELATED APPLICATIONS

This application claims priority and benefits of Chinese Patent Application No. 202010771190.2, Chinese Patent Application No. 202021586557.5, Chinese Patent Application No. 202010768996.6, and Chinese Patent Application No. 202021586558.X, the entire disclosures of which are incorporated herein by reference.

## FIELD

The present disclosure relates to the field of motor technologies, and more particularly, to a drive motor, a drive system having the drive motor, and a vehicle.

## BACKGROUND

A main drive motor is an important component of an electric vehicle. The main drive motor is different from a traditional motor used by a device such as a compressor. When the drive motor operates, since iron loss and copper loss of a stator assembly generates a great amount of heat, when cooling is not good, the temperature of both of a stator assembly and a rotor assembly is too high, resulting in demagnetization of a rotor magnet steel, burnout of a stator coil packet, and the like, which affects normal operation of the motor. Therefore, a heat dissipation design of a transmission motor can not meet heat dissipation requirement of the drive motor. In the related art, a cut edge disposed on an outer wall of a stator core is provided to improve a heat dissipation effect. However, the inventor of the present disclosure has found by studying the designing scheme that a cooling effect of the drive motor still cannot meet the requirements, and there is room for improvement.

## SUMMARY

The present disclosure aims to solve at least one of the technical problems in the related art to some extent.

To this end, embodiments of the present disclosure provide a drive motor with an improved cooling effect.

The embodiments of the present disclosure further provide a drive system having the drive motor described above.

The embodiments of the present disclosure further provide a vehicle having the drive motor described above.

According to embodiments of the present disclosure, a drive motor includes a motor housing having a fluid inlet and a fluid outlet; and a stator core mounted in the motor housing, an outer peripheral wall of the stator core having a cut edge extending in an axial direction of the stator core. A cooling fluid flow path is formed by a space between the cut edge and an inner peripheral wall of the motor housing. the fluid inlet and the fluid outlet are in communication with the cooling fluid flow path. The cut edge has a depth satisfying a relationship of

$$b = \frac{k_2 L h}{R_{out} - R_{in}}$$

, where $b$ is the depth of the cut edge, $R_{out}$ is an outer diameter of the stator core, $R_{in}$ is an inner diameter of the stator core, $L$ is a yoke thickness of the stator core, $h$ is a stacking thickness of the stator core, and $k_2$ is a coefficient ranging from 0.05 to 0.1.

According to the embodiments of the present disclosure, the drive motor can increase a contact area between cooling fluid and the stator core and improve heat dissipation efficiency of a motor under high power by arranging the cut edge. Further, it is possible to obtain a better heat dissipation effect by limiting the depth of the cut edge within the above range.

In some embodiments, a stator groove is defined on the outer peripheral wall of the stator core and extends in the axial direction of the stator core. The stator groove is in communication with the fluid inlet and the fluid outlet.

In some embodiments, the stator groove is of a rectangular shape. The stator groove has a depth satis-

$$a = \frac{k_1 L h}{R_{out} - R_{in}}$$

fying a relationship of , where $a$ is the depth of the stator groove, $R_{out}$ is the outer diameter of the stator core, $R_{in}$ is the inner diameter of the stator core, $L$ is the yoke thickness of the stator core, $h$ is the stacking thickness of the stator core, and $k_1$ is a coefficient ranging from 0.05 to 0.1.

In some embodiments, a plurality of stator grooves is divided into a plurality of groups of stator grooves, and the plurality of groups of stator grooves is evenly distributed at intervals in a circumferential direction of the stator core. A central angle $\theta_1$ corresponding to a spacing between adjacent groups of stator grooves ranges from 1 degree to 5 degrees.

In some embodiments, the plurality of groups of stator grooves is divided into first groove groups and second groove groups that are arranged alternately in the circumferential direction of the stator core. The cut edge is located in the second groove groups. Each of the second groove groups is divided into two first sections adjacent to a corresponding first groove group, and two second sections adjacent to a corresponding cut edge. The number of stator grooves of each of the first sections is greater than the number of stator grooves of each of the second sections. A central angle $\theta_{32}$ corresponding to a spacing between a first section and a second section adjacent to the first section ranges from 1 degree to 5 degrees. A central angle $\theta_{42}$ corresponding to a spacing between stator grooves of each section ranges from 0.5 degree to 2 degrees. A central angle $\theta_{52}$ corresponding

to each of the stator grooves ranges from 0.5 degree to 2 degrees. Each of the first groove groups is divided into a plurality of sets, and each of the plurality of sets includes a plurality of sections. A central angle $\theta_{21}$ corresponding to a spacing between adjacent sets ranges from 1 degree to 5 degrees. A central angle $\theta_{31}$ corresponding to a spacing between adjacent sections of each of the plurality of sets ranges from 1 degree to 5 degrees. A central angle $\theta_{41}$ corresponding to a spacing between stator grooves of each of the plurality of sections of each of the plurality of sets ranges from 0.5 degree to 2 degrees. A central angle $\theta_{51}$ corresponding to each of the stator grooves ranges from 0.5 degree to 2 degrees.

In some embodiments, the stator groove has a depth ranging from 1.5 mm to 2.5 mm.

In some embodiments, a plurality of fluid inlets is provided and spirally distributed along the motor housing.

In some embodiments, a housing groove is defined on the inner peripheral wall of the motor housing, and extends in a circumferential direction of the motor housing. The fluid inlet and the fluid outlet are in communication with the housing groove, respectively.

In some embodiments, a plurality of fluid inlets is provided and distributed in a circumferential direction of the motor housing. An included angle $\theta$ between central axes of adjacent fluid inlets is smaller than or equal to 180 degrees. A central angle $\beta$ between a projection of a center of each fluid inlet and a projection of a center of the cut edge closest to the fluid inlet on a cross section of the stator core ranges from 0 degree to 5 degrees.

In some embodiments, four cut edges and two fluid inlets are provided, and the central angle $\beta$ is 0 degree.

In some embodiments, four cut edges and four fluid inlets are provided, and the central angle $\beta$ is 0 degree.

In some embodiments, the four fluid inlets are arranged at intervals in an axial direction of the motor housing.

In some embodiments, the stator core is formed by stacking stator laminations. At least one stator circumferential groove is defined on the outer peripheral wall of the stator core, and extends in a circumferential direction of the stator core, to divide the stator core into a plurality of non-groove core segments and at least one groove core segment in the axial direction of the stator core.

In some embodiments, one groove core segment and two non-groove core segments are provided, and the stator groove and/or the cut edge are disposed on an outer peripheral wall of each of the two non-groove core segments.

In some embodiments, the one groove core segment is located at an axial middle position of the stator core.

In some embodiments, a central axis of the fluid inlet is located in a central cross section of the one groove core segment.

According to embodiments of the present disclosure in a second aspect, a drive system includes a decelerator, a controller, and the drive motor according to any one of the above embodiments. The decelerator is connected to a motor shaft of the drive motor, and the controller is connected to the drive motor.

According to embodiments of the present disclosure in a third aspect, a vehicle includes the drive motor according to any one of the above embodiments.

**BRIEF DESCRIPTION OF THE DRAWINGS**

FIG. 1 is a schematic view showing a drive motor according to an embodiment of the present disclosure.
FIG. 2 is a schematic view showing a stator core of a drive motor according to an embodiment of the present disclosure.
FIG. 3 is a schematic view showing a motor housing of a drive motor according to an embodiment of the present disclosure.
FIG. 4 is a schematic view showing a stator core of a drive motor according to another embodiment of the present disclosure.
FIG. 5 is a schematic view showing a stator lamination of a stator core of a drive motor according to an embodiment of the present disclosure.
FIG. 6 is a partial enlarged schematic view showing the stator lamination illustrated in FIG. 5.
FIG. 7 is another partial enlarged schematic view showing the stator lamination illustrated in FIG. 5.
FIG. 8 is yet another partial enlarged schematic view showing the stator lamination illustrated in FIG. 5.
FIG. 9 is a curve graph showing a coefficient $k_1$, a pressure drop, and a motor maximum temperature rise rate according to an embodiment of the present disclosure.
FIG. 10 is a curve graph showing a coefficient $k_2$, a pressure drop, and a motor maximum temperature rise rate according to an embodiment of the present disclosure.
FIG. 11 is a schematic view showing a drive motor according to another embodiment of the present disclosure.
FIG. 12 is a schematic view showing a stator lamination according to yet another embodiment of the present disclosure.
FIG. 13 is a schematic view showing a stator core of a drive motor according to yet another embodiment of the present disclosure.
FIG. 14 is a schematic view showing a stator core of a drive motor according to still another embodiment of the present disclosure.
FIG. 15 is a curve graph showing a central angle between a projection of a center of a fluid inlet of a drive motor on a cross section of a stator core and a projection of a center of a cut edge on a cross section of a stator core, a pressure drop, and a motor maximum temperature rise rate according to an embodiment of the present disclosure.

Reference numerals:

motor housing 1, housing groove 11, fluid inlet 12, stator core 2, cut edge 21, stator groove 22, stator circumferential groove 23, first groove group 221, second groove group 222, first section 2221, second section 2222.

**DETAILED DESCRIPTION**

The embodiments of the present disclosure are described in detail below, examples of which are illustrated in the accompanying drawings. The embodiments described below with reference to the accompanying drawings are exemplary, and are intended to be used to explain the present disclosure, but should not be construed as a limitation to the present disclosure.

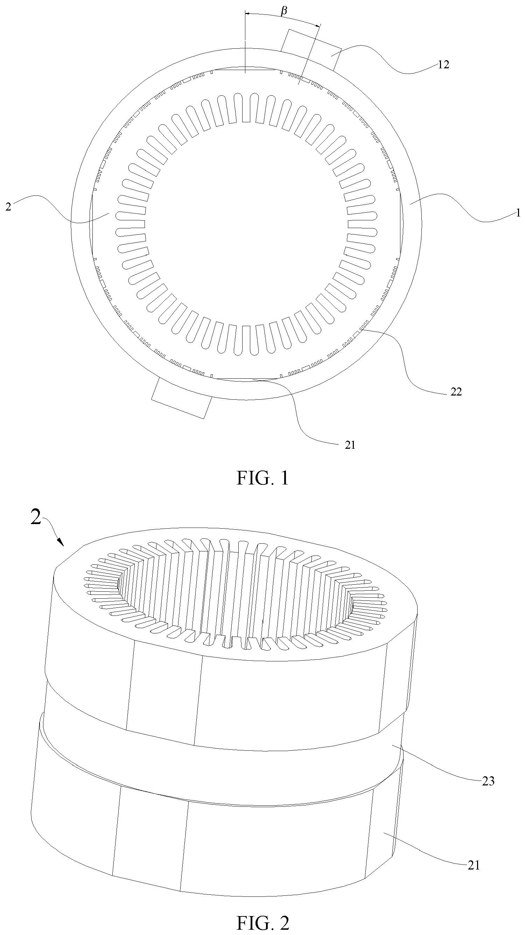

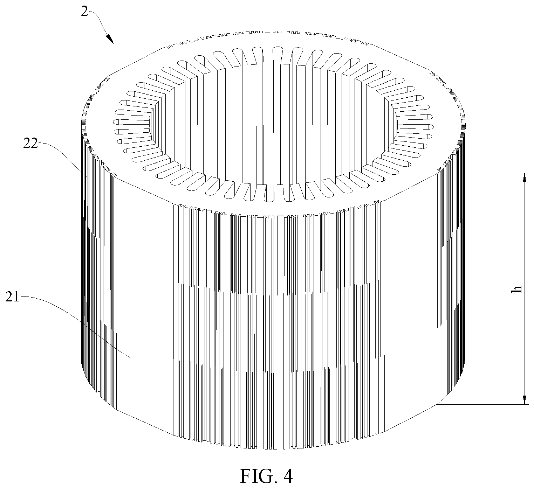

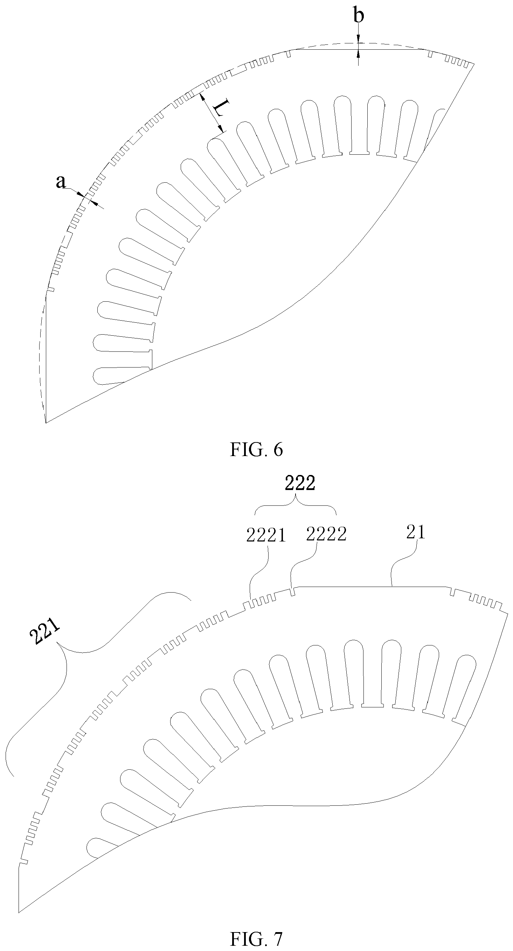

A motor according to embodiments of the present disclosure is described below with reference to FIGS. 1 to 15.

As illustrated in FIG. 1 to FIG. 4, according to the embodiments of the present disclosure, a drive motor includes a motor housing 1 and a stator core 2. A rotor (not illustrated) may be disposed in the stator core 2. A stator winding (not illustrated) is wound around a stator tooth of the stator core 2, thereby constituting a stator of the drive motor. The stator core 2 is mounted in the motor housing 1.

The motor housing 1 has a fluid inlet 12 and a fluid outlet (not illustrated). The fluid outlet is usually defined on an end cover (not illustrated) of the motor housing 1.

An outer peripheral wall of the stator core 2 has a cut edge 21 extending in an axial direction of the stator core. A cooling fluid flow path is formed by a space between the cut edge 21 and an inner peripheral wall of the motor housing 1. The fluid inlet 12 and the fluid outlet are in communication with the cooling fluid flow path. The cut edge 21 has a depth satisfying a relationship of

$$b = \frac{k_2 L h}{R_{out} - R_{in}}$$

, where $b$ is the depth of the cut edge, $R_{out}$ is an outer diameter of the stator core, $R_{in}$ is an inner diameter of the stator core, $L$ is a yoke thickness of the stator core, $h$ is a stacking thickness of the stator core, and $k_2$ is a coefficient ranging from 0.05 to 0.1.

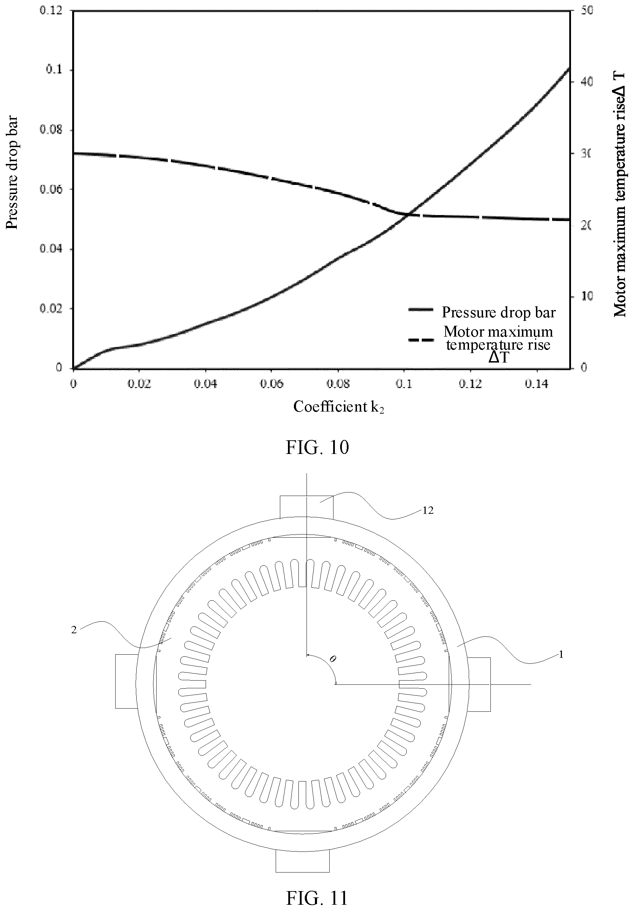

An inventor has found through research that, as illustrated in FIG. 10, as the coefficient $k_2$ increases, a pressure drop of cooling fluid increases (i.e., a flow resistance increases), and a maximum temperature rise of the motor gradually decreases. The lower the pressure drop, the better a cooling effect. The smaller the maximum temperature rise of the motor, the better service life and performance of the motor. Through comprehensive consideration, it is selected that the coefficient $k_2$ ranges from 0.05 to 0.1. Thus, thermal performance of the motor is good, and a raw material can be saved by providing the cut edge. For example, a cost of the raw material is reduced by 5.3%.

A stator groove 22 is defined on the outer peripheral wall of the stator core 2 and extends in the axial direction of the stator core 2. The stator groove 22 is in communication with the fluid inlet 12 and the fluid outlet. A part of the cooling fluid flow path is defined by an inner peripheral wall surface of the motor housing 1 and the stator groove 22. Thus, it is possible to increase a contact area between the cooling fluid and the stator core 2, which can improve heat dissipation efficiency.

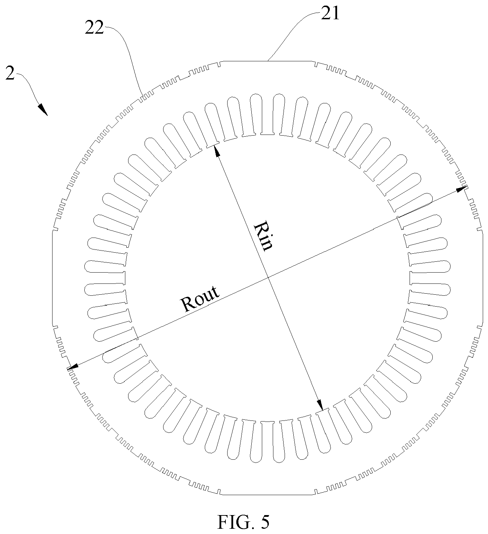

As illustrated in FIG. 5 to FIG. 8, the stator groove 22 is of a rectangular shape, and has a depth

$$a = \frac{k_1 L h}{R_{out} - R_{in}}$$

satisfying a relationship of , where $a$ is the depth of the stator groove, $R_{out}$ is the outer diameter of the stator core, $R_{in}$ is the inner diameter of the stator core, $L$ is the yoke thickness of the stator core, $h$ is the stacking thickness of the stator core, and $k_1$ is a coefficient ranging from 0.05 to 0.1.

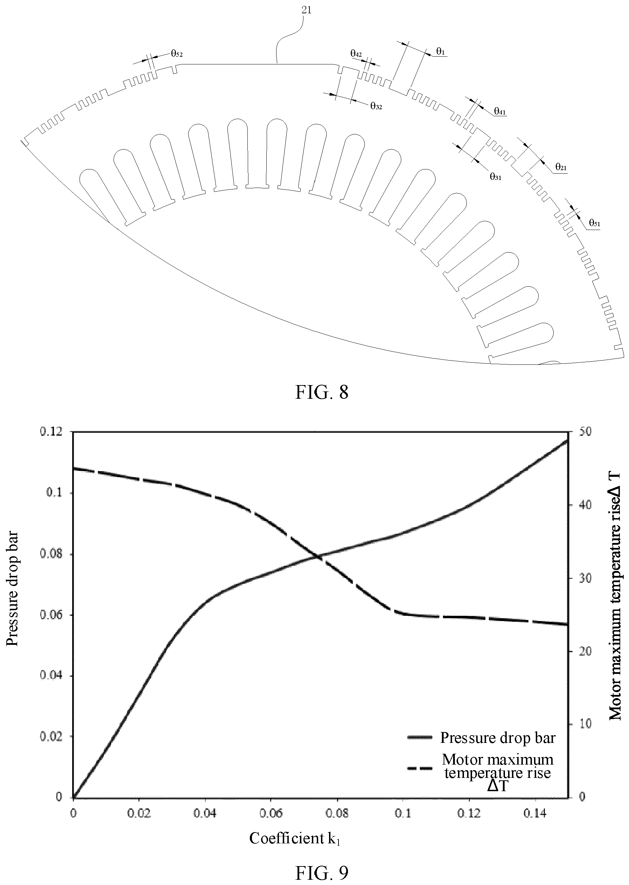

The inventor has found through research that, as illustrated in FIG. 9, as the coefficient $k_1$ gradually increases, the pressure drop of the cooling fluid increases (i.e., the flow resistance of the cooling fluid increases), and a temperature rise of the motor decreases. Moreover, when $k_1$ is in a range of 0 to 0.05, the pressure drop of the cooling fluid increases faster. When $k_1$ is greater than 0.1, the pressure drop of the cooling fluid increases, but reduction of the temperature rise of the motor remains substantially unchanged.

It can be seen from the above relationship that as $k_1$ increases, the depth of the stator groove increases, and a contact area between the stator groove and the cooling fluid increases. Since convection heat resistance and a convective heat transfer coefficient are inversely proportional to a contact area between the cooling fluid and the housing, the smaller the thermal resistance, the stronger a heat exchange capability. Therefore, it is better for the greater contact area between the cooling fluid and the stator core 2. However, the greater the contact area, the higher a flow velocity and the greater the flow resistance. Considering the above factors comprehensively, it is beneficial for a value of $k_1$ to range from 0.05 to 0.1.

In some embodiments, the depth $a$ of the stator groove 22 is greater than or equal to 1.5 millimeters and smaller than or equal to 2.5 millimeters. The inventor has found that when the depth $a$ of the stator groove is 1 mm, electromagnetic performance of the motor is reduced by 0.67%. When the depth $a$ of the stator groove is 2 mm, the electromagnetic performance of the motor is reduced by 1.5%. When the depth $a$ of the stator groove is 3 mm, the electromagnetic performance is reduced by 4.83%. Thus, it is beneficial to set the depth $a$ of the stator groove to range from 1.5 mm to 2.5 mm.

In some specific embodiments, the depth $a$ of the stator groove 22 is preferably 2 mm. A width $a$ of the stator groove 22 is preferably 1 mm. As described above, when the depth $a$ of the stator groove is 2 mm, the electromagnetic performance of the motor is reduced by 1.5%, which although has a certain influence on the electromagnetic performance, the influence is relatively small. Meanwhile, in this case, the contact area between the cooling fluid and the stator core is great, which can effectively improve the cooling efficiency of the motor.

As illustrated in FIGS. 5 to 8, in some embodiments, a plurality of stator grooves 22 is divided into a plurality of groups of stator grooves 22, and the plurality of groups of stator grooves 22 is evenly arranged at intervals in the circumferential direction of the stator core 2. A central angle $\theta_1$ corresponding to a spacing between adjacent groups of stator grooves ranges from 1 degree to 5 degrees.

In some embodiments, the plurality of stator grooves 22 is divided into first groove groups 221 and second groove groups 222. The cut edge 21 is located in the second groove groups 222. The first groove groups 221 and the second groove groups 222 are arranged alternately in the circumferential direction of the stator core 2, and are distributed at intervals. Each of the second groove groups 222 includes a first section 2221 and a second section 2222. The first section 2221 is close to the first groove group 221, and the second section 2222 is close to the cut edge 21. The number of the stator grooves 22 of the first section 2221 is greater than the number of the stator grooves 22 of the second section 2222. Since the cut edge 21 is located in the second groove groups 222, one first section 2221 and one second section 2222 are located at two sides of the cut edge 21, respectively. That is, each of the second groove groups 222 has two first sections 2221 and two second sections 2222. A central angle $\theta_{32}$ corresponding to a spacing between a first section 2221 and a second section 2222 adjacent to the first section 2221 ranges from 1 degree to 5 degrees. A central angle $\theta_{42}$ corresponding to a spacing between stator grooves 22 of each section ranges from 0.5 degree to 2 degrees. A central angle $\theta_{52}$ corresponding to each of the stator grooves 22 ranges from 0.5 degree to 2 degrees.

As illustrated in FIG. 8, each of the first groove groups is divided into a plurality of sets. FIG. 8 shows two sets. Each of the plurality of sets includes a plurality of sections, and FIG. 8 illustrates three sections. A central angle $\theta_{21}$ corresponding to a spacing between adjacent sets ranges from 1 degree to 5 degrees. A central angle $\theta_{31}$ corresponding to a spacing between adjacent sections of each of the plurality of sets ranges from 1 degree to 5 degrees. A central angle $\theta_{41}$ corresponding to a spacing between stator grooves 22 of each of the plurality of sections of each of the plurality of sets ranges from 0.5 degree to 2 degrees. A central angle $\theta_{51}$ corresponding to each of the stator grooves 22 ranges from 0.5 degree to 2 degrees. In some embodiments, a central angle corresponding to the cut edge 21 is 23 degrees.

By dividing the stator grooves as described above, the cooling effect can be effectively improved.

In some embodiments, a plurality of fluid inlets is spirally distributed along the motor housing. The inventor has found through research that the closer to the fluid inlets 12, the better the cooling effect. Therefore, by arranging the plurality of the fluid inlets 12, cooling capacity of the cooling fluid can be enhanced, and the heat dissipation effect of the motor can be improved. In other embodiments, the plurality of the fluid inlets 12 is arranged at intervals in an axial direction of the motor housing 1. That is, the plurality of fluid inlets 12 is arranged at intervals along a circumferential direction of the motor housing 1, and is further arranged at intervals in the axial direction of the motor housing 1. For example, the plurality of fluid inlets 12 is spirally distributed on the motor housing 1.

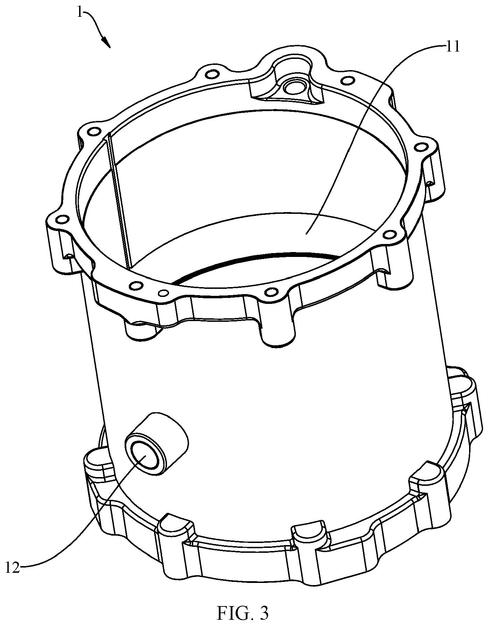

As illustrated in FIG. 3, in some embodiments, a housing groove 11 is defined on the inner peripheral wall of the motor housing 1, and extends in the circumferential direction of the motor housing. The fluid inlets 12 and the fluid outlet are in communication with the housing groove 11. The housing groove 11 is formed as a part of the cooling fluid flow path. Thus, the cooling effect is further improved.

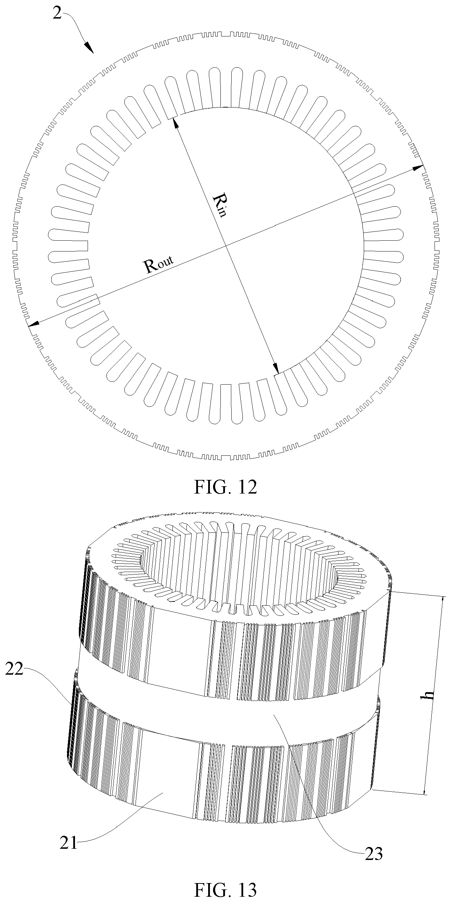

As illustrated in FIG. 1 and FIG. 12, in some embodiments, a plurality of fluid inlets 12 is provided and distributed in the circumferential direction of the motor housing 1. On a cross section of the motor housing 1, an included angle $\alpha$ between central axes of the adjacent fluid inlets 12 is smaller than or equal to 180 degrees. A central angle $\beta$ between a projection of a center of each fluid inlet 12 and a projection of a center of a cut edge 21 closest to the fluid inlet 21 on a cross section of the stator core 2 ranges from 0 degree to 5 degrees.

As shown in FIG. 1, the central angle $\beta$ refers to that an included angle between a projection of a connecting line between the center of each fluid inlet and a circle center of the stator core 2 and a projection of a connecting line between a midpoint of the cut edge 21 closest to the fluid inlet 12 and the circle center of the stator core 2 on the cross section of the stator core 2, and the included angle ranges from 0 degree to 5 degrees.

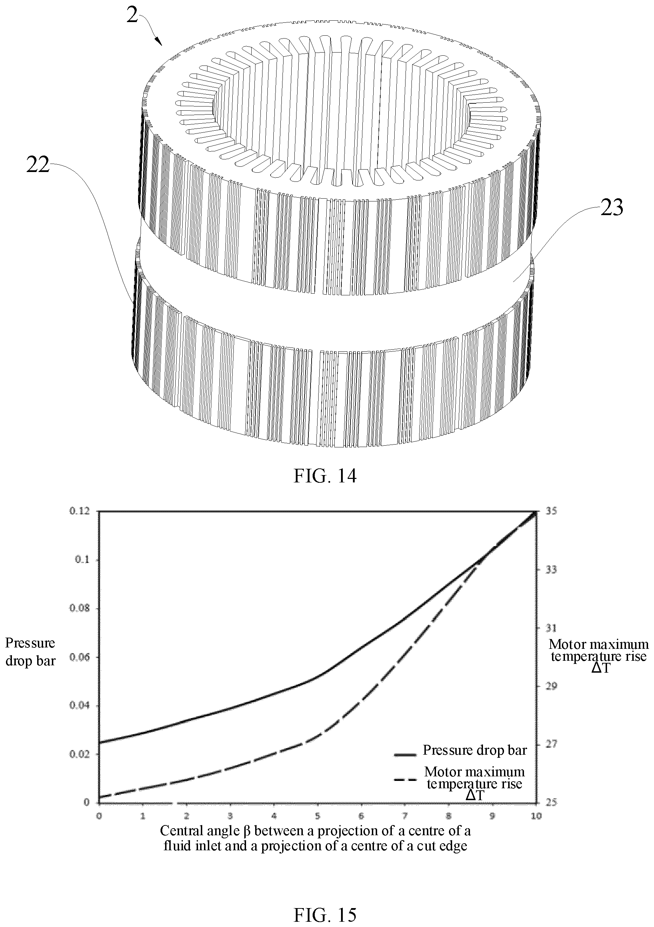

As illustrated in FIG. 15, a horizontal axis is the central angle $\beta$, a left vertical axis is the pressure drop, and a right vertical axis is the maximum temperature rise $\Delta T$ of the motor. The inventor has found through research that when the central angle $\beta$ gradually increases from 0 degree to 5 degrees, increasing rate of the pressure drop (illustrated by a curve indicated by a solid line) and increasing rate of the maximum temperature rise (illustrated by a curve indicated by a dotted line) of the motor are slower (slopes of two curves are small). When the central angle β gradually increases from 5 degrees, the increasing rates of the pressure drop and the maximum temperature rise of the motor is obviously accelerated (the slopes of the two curves increase). That is, the thermal performance of the motor is poor. Therefore, it is beneficial for the central angle between the projection of the center of the fluid inlet 12 and the projection of the center of the cut edge 21 closest to the fluid inlet on the cross section of the stator core 2 to range from 0 degree to 5 degrees.

As illustrated in FIG. 1, in some embodiments, four cut edges 21 and two fluid inlets 12 are provided. In this case, the central angle between the projection of the center of each fluid inlet 12 and the projection of the center of the cut edge 21 closest to the fluid inlet 21 on the cross section of the stator core 2 is β, which is preferably 0 degree. In some other embodiments, as illustrated in FIG. 12, four cut edges 21 and four fluid inlets 12 are provided. The central angle β between the projection of the center of each fluid inlet 12 and the projection of the center of the cut edge 21 closest to the fluid inlet 21 on the cross section of the stator core 2 is 0 degree. In some embodiments, the number of the fluid inlets is smaller than the number of the cut edges, and each of the fluid inlets corresponds to one cut edge.

The stator core 2 is formed by stacking stator laminations. The stator laminations are usually made of a silicon steel sheet. At least one stator circumferential groove 23 is defined on the outer peripheral wall of the stator core 2, and extends in the circumferential direction of the stator core 2. A stator core segment where the stator circumferential groove 23 is located is referred to as a groove core segment. The remaining stator core segments are referred to as non-groove core segments. The number of the groove core segments is the same as the number of the stator circumferential grooves 23.

By providing the stator circumferential groove 23, it is possible to increase the contact area between the cooling fluid and the stator core 2, and improve the heat dissipation efficiency. Further, the material for manufacturing the stator core can be saved, and the cost of the raw material can be effectively reduced.

As illustrated in FIG. 14, in some embodiments, one groove core segment and two non-groove core segments are provided, and the stator groove 22 in communication with the stator circumferential groove 23 are defined on an outer peripheral wall of each of the two non-groove core segments. As illustrated in FIG. 2, in other embodiments, one groove core segment and two non-groove core segments are provided, and the cut edge 21 is disposed on the outer peripheral wall of each of the two non-groove core segments. As illustrated in FIG. 13, in the other embodiments, one groove core segment and two non-groove core segments are provided, and both the stator groove 22 and the cut edge 21 are disposed on the outer peripheral wall of each of the two non-groove core segments.

One or more groove core segments may be provided, and the present disclosure is not limited herein.

In some embodiments, one groove core segment is in communication with the fluid inlet 12. That is, one stator circumferential groove is in communication with the fluid inlet 12. The groove core segment is located at an axial middle position of the stator core 2. In some embodiments, a central axis of the fluid inlet 12 is located in a central cross section of the one groove core segment.

The groove core segment is in communication with the fluid inlet 12. For example, after the cooling fluid enters the motor housing, the stator circumferential groove 23 at the groove core segment is filled with the cooling fluid firstly. Then, the cooling fluid is brought into in full contact with the outer peripheral wall of the stator core 2 through the stator grooves 22 and the cut edge 21, and is finally discharged through the fluid outlet 13. For the flowing process of the cooling fluid, the cooling fluid flows from a middle position towards two ends. The cooling fluid can be quickly in total contact with the stator core 2 to dissipate the heat. Thus, the heat dissipation efficiency can be improved.

According to embodiments of the present disclosure in a second aspect, a drive system is provided. The drive system includes a decelerator, a controller, and the drive motor as described above. The decelerator is connected to a motor shaft of the drive motor. The controller is connected to the drive motor.

According to embodiments of the present disclosure in a third aspect, a vehicle is provided. The vehicle includes the drive motor according to the embodiments of the present disclosure. The vehicle may be a new energy vehicle. The new energy vehicle includes a pure electric vehicle, an extended-range electric vehicle, a hybrid vehicle, a fuel cell electric vehicle, a hydrogen engine vehicle, and the like.

In the description of the present disclosure, it should be understood that, the orientation or position relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., is based on the orientation or position relationship shown in the drawings, and is merely for the convenience of describing the present disclosure and simplifying the description, rather than indicating or implying that the associated device or element must have a specific orientation, or be constructed and operated in a specific orientation, and therefore cannot be understood as a limitation to the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, etc., unless otherwise specifically defined.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although the embodiments of the present disclosure have been shown and described above, it should be understood that the above embodiments are exemplary and should not be construed as limiting the present disclosure. Those of ordinary skill in the art can make changes, modifications, substitutions and variations to the above embodiments within the scope of the present disclosure.

**Claims**

1.    A drive motor, comprising:

   a motor housing having a fluid inlet and a fluid outlet; and
   a stator core mounted in the motor housing, an outer peripheral wall of the stator core having a cut edge extending in an axial direction of the stator core, wherein:

      a cooling fluid flow path is formed by a space between the cut edge and an inner peripheral wall of the motor housing;
      the fluid inlet and the fluid outlet are in communication with the cooling fluid flow path; and
      the cut edge has a depth satisfying a relationship of $b = \dfrac{k_2 L h}{R_{out} - R_{in}}$ , where $b$ is the depth of the cut edge, $R_{out}$ is an outer diameter of the stator core, $R_{in}$ is an inner diameter of the stator core, $L$ is a yoke thickness of the stator core, $h$ is a stacking thickness of the stator core, and $k_2$ is a coefficient ranging from 0.05 to 0.1.

2.    The drive motor according to claim 1, wherein a stator groove is defined on the outer peripheral wall of the stator core and extends in the axial direction of the stator core, the stator groove being in communication with the fluid inlet and the fluid outlet.

3.    The drive motor according to claim 2, wherein:

   the stator groove is of a rectangular shape;
   the stator groove has a depth satisfying a relationship of $a = \dfrac{k_1 L h}{R_{out} - R_{in}}$ , where $a$ is the depth of the stator groove, $R_{out}$ is the outer diameter of the stator core, $R_{in}$ is the inner diameter of the stator core, $L$ is the yoke thickness of the stator core, $h$ is the stacking thickness of the stator core, and $k_1$ is a coefficient ranging from 0.05 to 0. 1.

4.    The drive motor according to claim 2 or 3, wherein:

   a plurality of stator grooves is divided into a plurality of groups of stator grooves, the plurality of groups of stator grooves being evenly distributed at intervals in a circumferential direction of the stator core; and
   a central angle $\theta_1$ corresponding to a spacing between adjacent groups of stator grooves ranges from 1 degree to 5 degrees.

5.    The drive motor according to claim 4, wherein:

   the plurality of groups of stator grooves is divided into first groove groups and second groove groups that are arranged alternately in the circumferential direction of the stator core;
   the cut edge is located in the second groove groups;
   each of the second groove groups is divided into two first sections adjacent to a corresponding first groove group, and two second sections adjacent to a corresponding cut edge, wherein:

      the number of stator grooves of each of the first sections is greater than the number of stator grooves of each of the second sections,
      a central angle $\theta_{32}$ corresponding to a spacing between a first section and a second section adjacent to the first section ranges from 1 degree to 5 degrees,
      a central angle $\theta_{42}$ corresponding to a spacing between stator grooves of each section ranges from 0.5 degree to 2 degrees, and
      a central angle $\theta_{52}$ corresponding to each of the stator grooves ranges from 0.5 degree to 2 degrees, and

each of the first groove groups is divided into a plurality of sets, each of the plurality of sets comprising a plurality of sections, wherein:

a central angle $\theta_{21}$ corresponding to a spacing between adjacent sets ranges from 1 degree to 5 degrees;
a central angle $\theta_{31}$ corresponding to a spacing between adjacent sections of each of the plurality of sets ranges from 1 degree to 5 degrees;
a central angle $\theta_{41}$ corresponding to a spacing between stator grooves of each of the plurality of sections of each of the plurality of sets ranges from 0.5 degree to 2 degrees; and
a central angle $\theta_{51}$ corresponding to each of the stator grooves ranges from 0.5 degree to 2 degrees.

6. The drive motor according to any one of claims 2 to 5, wherein the stator groove has a depth ranging from 1.5 mm to 2.5 mm.

7. The drive motor according to any one of claims 1 to 6, wherein a plurality of fluid inlets are provided and spirally distributed along the motor housing.

8. The drive motor according to any one of claims 1 to 7 wherein:

a housing groove is defined on the inner peripheral wall of the motor housing, and extends in a circumferential direction of the motor housing; and
the fluid inlet and the fluid outlet are in communication with the housing groove, respectively.

9. The drive motor according to any one of claims 1 to 8, wherein:

a plurality of fluid inlets are provided and distributed in a circumferential direction of the motor housing;
an included angle $\theta$ between central axes of adjacent fluid inlets is smaller than or equal to 180 degrees; and
a central angle $\beta$ between a projection of a center of each fluid inlet and a projection of a center of the cut edge closest to the fluid inlet on a cross section of the stator core ranges from 0 degree to 5 degrees.

10. The drive motor according to claim 9, wherein:

four cut edges and two fluid inlets are provided;

and
the central angle $\beta$ is 0 degree.

11. The drive motor according to claim 9, wherein:

four cut edges and four fluid inlets are provided; and
the central angle $\beta$ is 0 degree.

12. The drive motor according to claim 11, wherein the four fluid inlets are arranged at intervals in an axial direction of the motor housing.

13. The drive motor according to any one of claims 1 to 12, wherein:

the stator core is formed by stacking stator laminations; and
at least one stator circumferential groove is defined on the outer peripheral wall of the stator core, and extends in a circumferential direction of the stator core, to divide the stator core into a plurality of non-groove core segments and at least one groove core segment in the axial direction of the stator core.

14. The drive motor according to claim 13, wherein:

one groove core segment and two non-groove core segments are provided; and
the stator groove and/or the cut edge are disposed on an outer peripheral wall of each of the two non-groove core segments.

15. The drive motor according to claim 14, wherein the one groove core segment is located at an axial middle position of the stator core.

16. The drive motor according to claim 15, wherein a central axis of the fluid inlet is located in a central cross section of the one groove core segment.

17. A drive system, comprising:

a decelerator;
a controller; and
the drive motor according to any one of claims 1 to 16, wherein:

the decelerator is connected to a motor shaft of the drive motor; and
the controller is connected to the drive motor.

18. A vehicle, comprising the drive motor according to any one of claims 1 to 17.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

Central angle β between a projection of a centre of a
fluid inlet and a projection of a centre of a cut edge

FIG. 15

<table>
<tr><td colspan="2">**INTERNATIONAL SEARCH REPORT**</td><td>International application No.<br>**PCT/CN2021/110150**</td></tr>
</table>

**A. CLASSIFICATION OF SUBJECT MATTER**

H02K 9/19(2006.01)i; H02K 1/20(2006.01)i; H02K 5/20(2006.01)i

According to International Patent Classification (IPC) or to both national classification and IPC

**B. FIELDS SEARCHED**

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 安徽威灵汽车部件有限公司, 广东威灵汽车部件有限公司, 定子, 水, 油, 液, 冷却, 散热, 切边, 切口, 槽, 凹, 轭, 深度, 厚度, 高度, stator, water, oil, liquid, cool+, groove, recess, yoke, thickness, depth, height

**C. DOCUMENTS CONSIDERED TO BE RELEVANT**

| Category* | Citation of document, with indication, where appropriate, of the relevant passages | Relevant to claim No. |
|---|---|---|
| PX | CN 213185796 U (ANHUI WELLING AUTO PARTS CO., LTD. et al.) 11 May 2021 (2021-05-11)<br>description, paragraphs [0036]-[0071], and figures 1-13 | 1-18 |
| PX | CN 212695852 U (ANHUI WELLING AUTO PARTS CO., LTD. et al.) 12 March 2021 (2021-03-12)<br>description, paragraphs [0035]-[0061], and figures 1-10 | 1-8, 13-18 |
| PX | CN 212909262 U (ANHUI WELLING AUTO PARTS CO., LTD. et al.) 06 April 2021 (2021-04-06)<br>description, paragraphs [0064]-[0122], and figures 1-21 | 1-4, 6-18 |
| PX | CN 213243760 U (ANHUI WELLING AUTO PARTS CO., LTD. et al.) 18 May 2021 (2021-05-18)<br>description, paragraphs [0042]-[0082], and figures 1-15 | 1-4, 6-18 |
| A | CN 106300853 A (HEFEI GUOXUAN HIGH-TECH POWER ENERGY CO., LTD.) 04 January 2017 (2017-01-04)<br>description, paragraphs [0001]-[0033], and figures 1-3 | 1-18 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 September 2021** | **19 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/110150**

### C.    DOCUMENTS CONSIDERED TO BE RELEVANT

| Category* | Citation of document, with indication, where appropriate, of the relevant passages | Relevant to claim No. |
|---|---|---|
| A | CN 206575298 U (SHANGHAI INN-MAG NEW ENERGY TECHNOLOGY LTD.) 20 October 2017 (2017-10-20) entire document | 1-18 |
| A | JP 2010075011 A (MITSUBISHI ELECTRIC CORP.) 02 April 2010 (2010-04-02) entire document | 1-18 |

**INTERNATIONAL SEARCH REPORT**
Information on patent family members

International application No.

**PCT/CN2021/110150**

| Patent document cited in search report | | | Publication date (day/month/year) | Patent family member(s) | | | Publication date (day/month/year) |
|---|---|---|---|---|---|---|---|
| CN | 213185796 | U | 11 May 2021 | None | | | |
| CN | 212695852 | U | 12 March 2021 | None | | | |
| CN | 212909262 | U | 06 April 2021 | None | | | |
| CN | 213243760 | U | 18 May 2021 | None | | | |
| CN | 106300853 | A | 04 January 2017 | CN | 106300853 | B | 21 June 2019 |
| CN | 206575298 | U | 20 October 2017 | None | | | |
| JP | 2010075011 | A | 02 April 2010 | JP | 5042178 | B2 | 03 October 2012 |

Form PCT/ISA/210 (patent family annex) (January 2015)

**EP 4 131 744 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010771190
- CN 202021586557
- CN 202010768996
- CN 202021586558X